Europäisches Patentamt

European Patent Office

Office européen des brevets

(19)

(11) Publication number: **0 487 747 A1**

## EUROPEAN PATENT APPLICATION
### published in accordance with Art. 158(3) EPC

(21) Application number: 91910855.5

(22) Date of filing: 18.06.91

(86) International application number: PCT/SU91/00119

(87) International publication number: WO 91/19891 (26.12.91 91/29)

(51) Int. Cl.5: F02C 3/09

(30) Priority: 18.06.90 SU 4847056

(43) Date of publication of application: 03.06.92 Bulletin 92/23

(84) Designated Contracting States: DE FR GB IT SE

(71) Applicant: FEDORYAKA, Andrei Andreevich ul. Kirovogradskaya, 4-4-82 Moscow, 103735(SU)

(72) Inventor: FEDORYAKA, Andrei Andreevich ul. Kirovogradskaya, 4-4-82 Moscow, 103735(SU)

(74) Representative: Godwin, Edgar James et al MARKS & CLERK 57-60 Lincoln's Inn Fields London, WC2A 3LS(GB)

(54) **METHOD AND DEVICE FOR TRANSFORMATION OF POTENTIAL ENERGY OF THE AIR INTO MECHANICAL ENERGY OF SHAFT ROTATION.**

(57) A method is proposed where an air flow (a) fed to a vacuum zone (1) consists of a plurality of elementary vortex jets (b). Said flow has an annular form and is subjected in the vacuum zone (1) to additional spinning as a result of which it transforms into an entire vortex flow (c). Then the vortex flow (c) is subjected to additional compression due to injection of a stream of atmospheric air (d) and compression under the influence of the electromagnetic radiation of the environment, and then, in the course of its expansion, performs the mechanical work of rotating a shaft. In the proposed device the guiding means (4) of a vane compressor (2) consists of a conical body whose generatrix has a negative curvature. The blades (8) of the impeller (5) are crescent-shaped and are secured on a carrying element (9). The surface of the latter has a conical form whose generatrix has a negative curvature and conjugates with the surface of the guiding means (4).

FIG.1

The present invention relates to power engineering and, more specifically, to a method for conversion of potential energy of air into mechanical energy of shaft rotation, and to an apparatus for carrying said method into effect.

## Review of the state in the art

The fast progressing aggravation of the ecological catastrophe is brought about, in the view of a number of experts, by the development of industrial power engineering based mainly upon combustion of organic hydrocarbon fuels. This vision of the problem is sufficiently substantiated, since, in accordance with the statistical data, about eight billion tonnes of hydrocarbons are burnt annually on our planet to form a corresponding amount (both in terms of weight and volume) of carbon dioxide gas $CO_2$ thus leading to a decrease in the free oxygen content in atmosphere. The carbon dioxide gas formed during the last decades has already coated the entire surface of the Earth with a transparent layer that is denser than the atmospheric air, thereby transforming our planet into a thermal trap. This circumstance causes a potent overheating of the surfaces of the continents and of the worl ocean. As a result, we are witnessing, at an ever quickening pace, recurrence of large-scale droughts and floods in nearly all the regions of our planet, even in those regions where similar phenomena had almost never before been observed. This leads to an intensive destruction of the Earth's biosphere and compels mankind to seek ways for its survival. It is exactly for this reason that experts have now become so active in their search for alternativ energy sources.

Gas turbine plants - both stationary and mobile ones - belong to industrial power generating plants operating by combustion of hydrocarbons, thereby polluting the Earth's biosphere with carbon dioxide gas.

There are known in the prior art a method for converting potential energy of air into mechanical energy of a rotating shaft and an apparatus for carrying said method into effect (Ref. A.I.Andriushchenko "Fundamental Thermodynamic Aspects of Operating Cycles of Heat Power Generating Plants", 1977, Moscow, Vysshaya Shkola Publishers, p.97), which method comprises the following operations:

A depression zone is created within a closed space by causing atmospheric air to rotate, and a flow of atmospheric air is admitted into the depression zone under the effect of the atmospheric pressure. The atmospheric air is subjected to compression, accompanied by heating of the compressed air. The heat thus-generated needs to be withdrawn, whereby, accordingly, the compression process efficiency is affected. A combustible substance is next admixed to the compressed air flow. On burning, the combustible substance provokes a temperature rise and a pressure rise due to the formation of combustion products. Upon expanding, the combustion products cause a shaft to revolve.

The above-described method is carried into effect in an apparatus, which comprises a hollow housing accomodating, arrnaged in succession following the air flow, a vane compressor and a gas turbine. The compressor impeller is mounted on a shaft coupled to the shaft of the gas turbine. The housing also accomodates a combustion chamber interposed between the compressor and the gas turbine. The prior-art apparatus has a poor thermal efficiency because of energy losses to remove heat during compression of air and because of the need to maintain a high temperature of spent gases. Moreover, spent gases contain incomplete combustion products which pollute the biosphere.

## Disclosure of the invention

The present invention seeks to solve the problem of developing an ecologically clean method for converting potential energy of atmospheric air into the mechanical energy of a rotating shaft by forming such an air flow in which a continuous compression of air would take place, as well as the problem of developing an apparatus intended to carry into effect the aforesaid method for converting potential energy of air into the mechanical energy of a rotating shaft, in which apparatus - owing to an appropriately designed guiding device and owing to suitably designed vanes of the compressor impeller the thermal efficiency would be increased.

The above-formulated problem is solved by that in a method for converting potential energy of air into the mechanical energy of a rotating shaft, comprising the steps of: creating a depression zone within a closed space by causing the atmospheric air to rotate; admitting an air flow into said depression zone under the effect of the atmospheric pressure; subjecting said air flow to compression, followed by expansion accompanied by the work performed by a rotating shaft, there are introduced, in accordance with the present invention, the following improvements: said air flow admitted to the depression zone is constituted by a plurality of elementary eddy jets, each of which, in a plane perpendicular to the axis of rotation of the air, has a trajectory (path) of movement similar to a hyperbolical helix having its centre lying on the air rotation axis, so that a plurality of eddy jet trajectories form a surface similar to a pseudosphere in their movement towards said depression zone; pri-

or to being subjected to compression within said depression zone, said air flow is subjected to additional swirling around the air rotation axis, as a result of which there is formed, at the outlet from said depression zone, an eddy flow whose linear velocity vector is directed along the air rotation axis, while compression is carried out by injecting said atmospheric air flow as eddy flow. The above-described procedure of realization of the method of the invention ensures the formation of an air flow in which continuous compression takes place. This phenomenon is explained by the fact that creation of said depression zone causes an increase in the linear velocity of moving molecules, while the presence of a spin in molecules results in their rotary movement. As a result, elementary eddy jets are formed, accompanied by an increase of the momentum, of the moment of the momentum (angular momentum), and of the density of each elementary eddy jet. The fact that each elementary eddy jet moves along a helical path having its centre lying on the air rotation axis, while, simultaneously, displacing itself towards the centre of rotation results in their interaction between themselves, followed by their merging together with further increase in the linear and rotational velocities of movement, an increase in the density, and with a formation of an annular flow before its entry into said depression zone. Moreover, the fact of imparting to said annular flow an additional moment of the momentum within the depression zone in a direction coinciding with the direction of its rotation results in the formation of a continuous eddy flow at the outlet from this depression zone. In the process of the formation of the eddy flow, there takes place further increase in its moment of the momentum, further increase in its translational momentum and its density. Further increase in the density of the eddy flow takes place by injection of the atmospheric air, since this injection leads to a still greater compression of the air, to an increase of its mass, and to an increase in its rotational and translational velocities. Simultaneously, since compression of the flow takes palce in a dynamic mode, there also takes place an additional compression of the flow all over its surface under the effect of the electromagnetic radiation from the surrounding environment (medium).

It is also possible to add to the eddy flow a combustible substance in order to increase the single-unit power required for performing the mechanical work of rotating a shaft as a result of expansion of combustion products.

The technical problem formulated above is also solved with the help of an apparatus for carrying into effect the method for converting the potential energy of air into the mechanical energy of a rotating shaft, which apparatus comprises, arranged in succession following the direction of movement of an air flow, a vane compressor whose impeller is mounted on a shaft and enclosed by a housing, and a gas turbine whose shaft is positioned in a coaxial relationship with the shaft of the impeller of the compressor, said apparatus being characterized in the following features of inventive movelty: the guiding unit of said vane compressor is formed as a conically shaped body whose generatrix surfaces have a negative curvature; the vanes of said impeller are made sickle-shaped and secured to a conically shaped supporting member which is attached to the shaft and which is arranged coaxially to said guiding unit; the vertex of said conically shaped supporting member lies on the air flow rotation axis, while its surface is conjugated (mated) with the surface of said guiding unit.

The above-described structural arrangement of the apparatus of the invention makes it possible to increase its thermal efficience. This is accomplished by the fact that realization of the surface of the guiding unit in the form of a pseudo-sphere forms such an annular eddy flow in which, when it leaves the depression zone, the vector of translational and rotational movements of all its elementary jets are directed to one and the same side, as a result of which these vectors are added up, whereby the velocities of their rotational and translational movements are increased and whereby a continuous (integral) eddy flow is formed, possessing the density and kinetic energy demonstrated by sand-storms, water-spouts, tornadoes, and such like phenomena of nature.

In the process of the formation of the eddy flow, from the very moment of genesis of its constituent elementary eddy jets, there takes place a progressive drop of the air temperature caused by a drop in the heat content of the atmospheric air, which heat content drop, in turn is caused by conversion of the potential energy of the atmospheric air into the kinetic energy of moving air jets and air flow. The fact that said guiding unit is made with a well developed base contributes to increase the power of the eddy flow being formed. The fact that the vanes of the impeller are made sickle-shaped impedes emergence of centrifugal forces in the air jets inflowing into the depression zone and contributes to their displacement towards the centre of rotation. Interaction of the vanes with eddy jets promotes to increase the rotational and translational velocities of movement of the annular eddy flow and to increase its density. The fact that the surfaces of the supporting member of the impeller are conjugated (mated) with those of the guiding unit contributes to make smooth the stream of the annular eddy flow and to convert the latter into a continuous, integral eddy flow at the outlet from the depression zone.

It is advisable that the vanes be secured to the supporting member in such a manner that the angle having an apex lying on the leading edge of a vane and comprised between the vector of the rotational velocity of the impeller and a straight line connecting two extrememost points of a section line along which the cylindrical surface coaxial to the impeller rotation axis dissects the working surface of the vane, be equal to approximately 90°. The fact that the vanes are mounted at this particular angle ensures coincidence of the directions of the vectors of rotary movements of the annular eddy flow inflowing into the depression zone, and of the impeller, whereby energy consumption required to rotate the air is minimized.

It is advisable that the housing be formed as a body of revolution secured on the guiding unit by means of ribs provided for this purpose on the guiding unit. it is also advisable that the housing would be composed of two portions arranged in succession following the direction of the air flow, of which a first portion would be made cylindrical, while a second portion be made conically shaped in such a manner that the generatrix of its surface would have a negative curvature. It is equally advisable that the entry opening (inlet) of the housing would have a diameter that is greater than the outer diameter of the impeller and than that of the discharge opening (outlet). This structural arrangement of the housing is optimum from the point of view of energy consumption required for creating depression within the housing and for optimizin conditions for injection of the atmospheric air flow into the eddy air flow.

It is advisable that each rib of the guiding unit, in the plane perpendicular to the axis of rotation of the impeller, would be similar to a hyperbolical spiral having a centre lying of the axis of rotation, and would have a variable height increasing from periphery towards the centre of rotation.

This shape of the ribs on the outside surface of the guiding unit promotes the formation of eddy movement of elementary air jets. The fact that each rib is realized with a variable height is brought about by an increase in the cross-section of air jets in the direction of the axis of their rotation.

Brief Description of Drawings

The essence of the present invention will be better understood with the help of the following Example illustrative of its embodiment, accompanied with appended drawings, wherein:
Figure 1 schematically shows the apparatus in accordance with the present invention for conversion of the potential energy of air into the mechanical energy of a revolving shaft, a longitudinal sectional view;

Fig.2 is a section along II - II of Fig.1;
Fig.3 is an enlarged sectional view of a vane of the compressor impeller, when it is dissected by a cylindrical surface coaxially with the axis of rotation of air, on an enlarged scale;
Fig.4 is a two-stage turbine used in the apparatus of the invention, an enlarged view;
Fig.5 shows the turbine with its housing removed, as viewed along arrow A; and
Fig.6 is a section along VI - VI of Fig.4.

Best Embodiment of the Invention

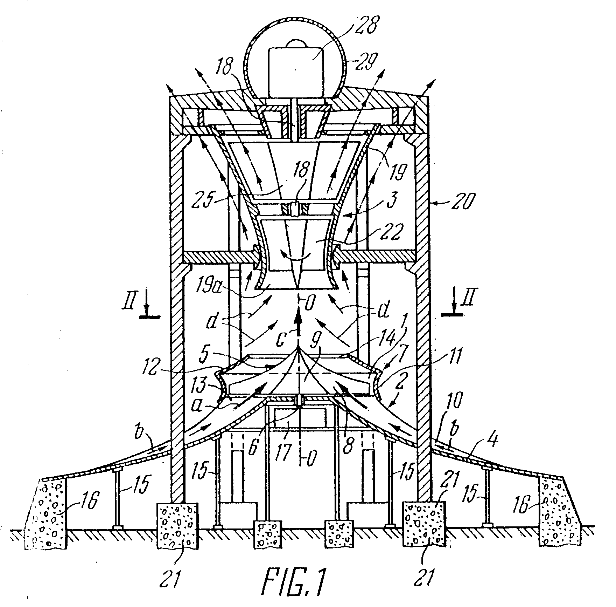

The method for converting the potential energy of air into the mechanical energy of a revolving drive shaft, in accordance with the present invention, makes provision for creating a depression zone 1 within a confined space (see Fig.1) by causing the atmopsheric air to rotate. Creation of a depression zone leads to an increase in the linear velocity of moving molecules, while the fact that molecules also have a spin imparts to the molecules a rotary motion. As a result, there takes place the formation of elementary air jets b, accompanied by an increase in the momentum, of the moment of the momentum (or angular momentum) and of the density of each elementary air jet. Into said depression zone 1, under the effect of the atmospheric pressure, an air flow a is admitted, the air flow a being constituted by a plurality of the elementary eddy jets b. Each one of the jets b, in the plane perpendicular to the air rotation axis, has a trajectory (path) of movement similar to a helix having its centre lying on the air rotation axis O - O. As the air jets b move along a spiral line, they are shifted towards the centre of rotation. As a result, the elementary jets b interact with each other, merge together, their linear and rotational velocities of movement increase, their density increases too, and finally an annular air flow a is formed before the inlet (entry) into the depression zone 1. A plurality of trajectories of the eddy jets b, as they are shifted towards the centre of rotation, form a surface similar to a pseudo-sphere formed by rotation of a tractrix around a base coinciding with the air rotation axis O - O. As the air flow a gets into the depression zone 1, it is subjected to additional swirling around the air rotation axis O - O in a direction coinciding with the direction of air rotation, which leads to a still greater increase in the rotational and translational velocities of its movement, and to a still greater density. As a result, at the outlet from the depression zone 1, a continuous (integral) eddy flow c is formed.

Further increase in the density of the eddy flow c takes place by injecting an atmospheric air flow d. As a result, a still greater compression takes place, and the mass, translational and rotational velocities increase. Besides, on account of the electromagnetic raidation of the surrouunding medium an additional compression takes place all over the surface of the flow c.

Hence, the continuous eddy air flow thus-formed possesses such a density and a kinetic energy as are comparable to those exhibited by water-spouts, sand-storms, tornadoes, and such like natural phenomena. As said continuous eddy air flow expands, it performs work, for instance, the work of retating a shaft. Whenever it is necessary to increase the single-unit power of the flow c for performing a mechanical work of rotating a shaft, a combustible substance can be added to said flow.

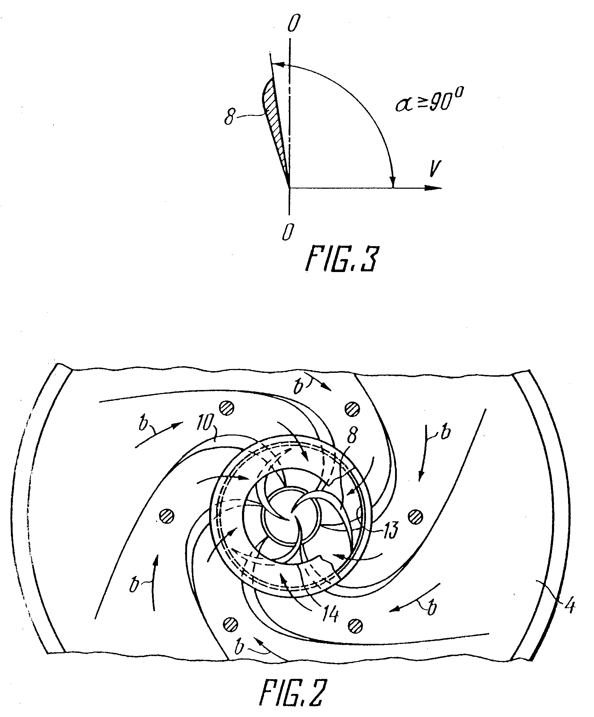

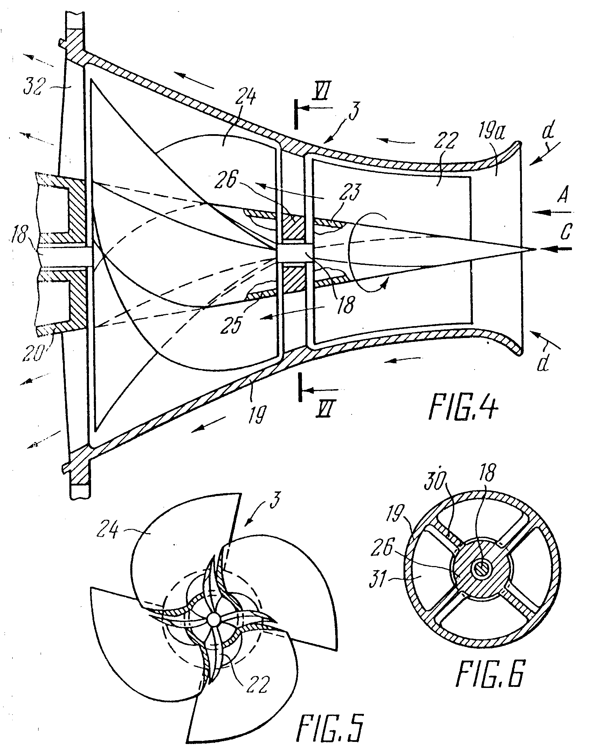

The apparatus for carrying into effect the aforesaid method in accordance with the present invention comprises, arranged in succession following the direction of movement of the air flow, a vane compressor 2 and a gas turbine 3. The vane compressor 2 includes a guiding unit 4 and an impeller 5 mounted on a shaft 6 and accomodated within a housing 7. The guiding unit 4 represents a conically shaped body having an expanded base. The generatrix of its conically shaped surface has a negative curvature. The axis of rotation of the impeller 5 coincides with the longitudinal axis of the guiding unit 4. The vanes 8 of the impeller 5 are made sickle-shaped (Fig.2) and attached to a conically shaped supporting member 9 whose apex lies on the rotation axis of the impeller 5. The member 9 is associated with the shaft 6 in coaxial relationship with the guiding unit 4, and its surface is conjugated (mated) with that of the guiding unit 4. The surface of the supporting member 9 is conically shaped, and the generatrix of this surface has a negative curvature. The vanes 8 are secured to the supporting member 9 in such a manner as to form an angle $\alpha$ approximately equal to 90° (Fig.3). The vertex of this angle $\alpha$ lies on the leading edge of the vane 8 comprised between the vector of the rotational velocity V of the impeller and a straight line connecting two extrememost points of a line along which a cylindrical surface passed coaxially with the impeller rotation axis dissects the working surface of the vane 8. This mounting angle of the vanes 8 is conductive to coincidence of the directions of vectors of rotary motion of the annular eddy flow a and of the impeller 5, whereby energy consumption requried to rotate air is minimized. The housing 7 (Fig.1) is formed as a body of revolution attached to the guiding unit 4 with the help of ribs 10 provided on the unit for this purpose. The housing 7 mm has two portions 11, 12 arranged in succession following the direction of the air flow. The portion 11 is made cylindrically shaped, while the portion 12 is conically shaped, and the generatrix of its surface has a negative curvature. The entry opening (inlet) 13 of the housing 7 has a diameter that is greater than the outer diameter of the impeller 5 and greater than that of its discharge opening (outlet) 14. Such shape of the housing 7 is optimum from the point of view of savings on energy requirements for establishing a depression zone within it and for improving conditions for injecting the atmospheric air flow d into the continuous (integral) eddy flow c. Each rib 10 (Fig.2) of the guiding unit 4, in a plane perpendicular to the rotation axis of the impeller 5, is shaped as a hyperbolical helix having its centre lying on the rotation axis O - O. The height of each rib is variable and increases from periphery towards the centre of rotation. Such shape of the ribs 10 is conducive to the formation of the vortex movement of elementary air jets b. The Guiding unit 4 rests on a foundation plate 16 and secured thereto with the aid of a supporting assembly 15. The impeller 5 is set into rotary motion by a drive unit 17 housed within the guiding unit 4. The gas turbine 3 (Fig.1) is made two-staged. Its shaft 18 is disposed coaxially to the shaft 6 of the impeller 5. The turbine 3 is housed by a housing 19 rigidly attached to a supporting assembly 20 resting on a foundation plate 21. The enetry portion 19a of the housing 19 is made expanding to meet the eddy air flow c. The vanes 22 (Figs.4 and 5) of the first stage of the gas turbine 3 are secured on a supporting member 23 associated with the turbine shaft 18. The supporting member 23 is made conically shaped and has its taper pointed to meet the air flow c. The vanes 24 of the second stage of the gas turbine 3 are secured to a conically shaped suporting member 25 associated with the shaft 18. The latter has two props, one of which rests on a spider 26 (Fig.6) of the housing 19, while the other prop rests on the supporting assembly 20. The output end of the shaft 18 is connected to a generator 28 (Fig.1) accomodated within a housing 29. The ribs 30 (Fig.6) of the spider 26 have the shape of guide vanes. The openings 31 formed in the spider 26 are intended for passage of air. The discharge ports 32 (Fig.4) in the housing 19 serve to discharge exhaust flow into air.

The apparatus of the invention is operated in the following manner:

To drive unit 17 (Fig. 1) causes the shaft 6 of the impeller 5 to revolve, setting the latter into rotary motion. As the impeller 5 rotates, a depression zone 1 is established within the space of the housing 7, whereto, under the effect of the atmospheric air, an annular air flow a is admitted, constituted by a plurality of elementary eddy jets b formed on the guiding surface 4. In the depression zone 1, said air flow a is additionally swirled by the impeller 5 and, on leaving the discharge opening 14 of the housing, it is transformed into a continuous eddy air flow c. The latter is subjected to compression by injecting thereinto an atmospheric air flow d, and directed into the entry portion 19a of the housing 19 of the gas turbine 3. The air flow c meets the taper of the supporting member 23 and is sent against the vanes 22 of the first stage of the gas turbine 3, in which a portion of its momentum is converted into a torque at the shaft 18. The flow c further passes through the ports 31 (Fig.6) of the spider 26 and arrives to hit the vanes 24 (Figs. 4 and 5) of the second turbine 3 stage, where further expansion of the air flow takes place, accompanied by performance of a mechanical work (rotation of the shaft 18) which is converted by the generator into electrical energy. The exhaust flow is ejected through the ports 32 (Fig.4) to atmosphere.

Industrial-Scale Applicability

Best advantage can be derived from the use of the present invention in electric power stations. With an equal success the present invention can be used as a propulsive device for air-borne, aquatic and terrestrial vehicles.
The use of the method and apparatus in accordance with the present invention in an arrangement, wherein the compressor impeller has an outer diameter of 10 m, has 3 vanes, the impeller shaft revolves at 600 r.p.m., the distance between the compressor outlet and the turbine housing inlet is 6 m, and the drive unit of the compressor has a power of 500 to 1,000 kWt, makes it possible to obtain at the turbine shaft a net power of from 150 to 200 thousand kWt.

**Claims**

1. A method for conversion of the potential energy of air into the mechanical energy of a revolving shaft, comprising operations of: creating a depression zone (I) within a confined space by causing the atmospheric air to rotate; admitting into said depression zone, under the effect of the atmospheric pressure, an air flow; subjecting said air flow to compression; expanding the air flow thus-compressed, accompanied by performance of a revolving shaft (18), **characterized** in that the air flow (a) admitted into said depression zone (I) is constituted by a plurality of elementary eddy jets (b), each of which, as viewed in a plane perpendicular to the air rotation axis, has a trajectory of movement similar to a hyperbolical helix having its centre lying on the air rotation axis (O-O), while the plurality of the trajectories of the air eddy jets (b) during their movement towards said depression zone (I) form a surface similar to a pseudo-spehre; and in that, prior to compression within said depression zone (I), said air flow (a) is subjected to additional swirling around the air rotation axis (O-O), as a result of which, at the outlet from said depression zone (I), an eddy air flow (c) is formed, whose linear velocity vector is directed along the air rotation axis (O-O), said compression being carried out by injecting an atmospheric air flow (d) into said eddy air flow (c).

2. A method for energy conversion as claimed in Claim 1, **characterized** in that a combustible substance is added to said eddy air flow (c).

3. An apparatus for carrying into effect the method as claimed in Claim 1, comprising: arranged in succession following the direction of movement of the air flow, (a), a vane compressor (2) whose impeller (5) is mounted on a shaft (6) and accomodated within a housing (7), and a gas turbine (3) having its drive shaft (18) extending coaxially to the shaft (6) of said impeller (5) of the compressor, **characterized** in that the guide unit (4) of said vane compressor (2) represents a conically shaped body whose surface has a generatrix with a negative curvature; the vanes (8) of said impeller (5) are made sickle-shaped and secured to a conically shaped supporting member (9) which is associated with the shaft (6) and which is disposed coaxially to said guide unit (4); the apex of said conically shaped supporting member (9) lies on the rotation axis (O-O) of the impeller and the surface of the member (9) is conjugated with the surface of said guide unit (4).

4. An apparatus as claimed in Claim 3, **characterized** in that said vanes (8) are secured to said supporting member (9) in such a manner as to form an angle ( $\alpha$ ) which is equal to approximately 90° and which has its apex lying on the leading edge of the vanes (8), comprised between the rotational velocity vector (V) of the impeller (5) and a straight line connecting two extrememost points of a line, along which the working surface of the vane (8) is dissected by a cylindrical surface extending coaxially to the rotation axis of the impeller (5).

5. An apparatus as claimed in Claim 3, **characterized** in that said housing (7) is formed as a body of revolution secured to said guide unit (4) with the help of ribs (10) provided thereon; said housing (7) consists of two portions (11, 12) arranged in succession following the direction of the air flow, of which a first portion is made cylindrically shaped, while the other portion is made conically shaped, having the generatrix of its surface with a negative curvature, the entry opening (13) of the housing (7) being greater than the outer diameter of said impeller (5) and greater than that of the discharge opening (14).

6. An apparatus as claimed in Claim 5, **characterized** in that each rib (10) of said guide unit (4) is shaped, in a plane perpendicular to the rotation axis of the impeller, similarly to a hyperbolical helix having its centre lying on the rotation axis of the impeller (5), and each rib has a variable height increasing from periphery towards the centre.

FIG.1

FIG.3

FIG.2

FIG.4

FIG.5

FIG.6

# INTERNATIONAL SEARCH REPORT

International Application No PCT/SU91/00119

| I. CLASSIFICATION OF SUBJECT MATTER (if several classification symbols apply, indicate all) [6] |
|---|
| According to International Patent Classification (IPC) or to both National Classification and IPC |
| Int.Cl.5    F02C 3/09 |

## II. FIELDS SEARCHED

**Minimum Documentation Searched [7]**

| Classification System | Classification Symbols |
|---|---|
| Int.CL.5 | F02C 3/05, 3/08, 3/09, 3/10 <br> F04D 29/26-29/24, 29/40-29/44 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 4452046 (ZAPATA M. VALENTIN) <br> 5 June 1984 (05.06.84) | 1,2,3 |
| A | GB, A, 2216605 (HOOVER PLC), 11 October <br> 1989(11.10.89), Figures 11,5 | 3,6 |
| A | SU, A1, 1557365 (VOSTOCHNO-SIBIRSKY <br> TEKHNOLOGICHESKY INSTITUT) 15 April <br> 1990 (15.04.90) figure 1 | 3-5 |
| A | SU, A1, 966316 (PROIZVODSTVENNOE OBIEDI- <br> -NENIE"NEVSKY ZAVOD IM. V.I.LENINA") <br> 15 October 1982 (15.10.82) <br> the drawing | 3 |
| A | SU, AI, 1273650 (VOSTOCHNO-SIBIRSKY <br> TEKHNOLOGICHESKY INSTITUT) <br> 30 November 1986 (30.11.86) fig. 1,2 | 3 |
| A | SU, AI, 620676 (VSESOJUZNY NAUCHNOISSLEDO- <br> VATELSKY INSTITUT OKHRANY TRUDA <br> VTsSPS) 7 July 1978 (07.07.78) <br> the claims, the drawing | 6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 15 August 1991 (15.08.91) | 17 September 1991 (17.09.91) |

| International Searching Authority | Signature of Authorized Officer |
|---|---|
| European Patent Office | |

Form PCT/ISA/210 (second sheet) (January 1985)

**III. DOCUMENTS CONSIDERED TO BE RELEVANT   (CONTINUED FROM THE SECOND SHEET)**

| Category * | Citation of Document, with indication, where appropriate, of the relevant passages | Relevant to Claim No |
|---|---|---|
| A | SU, A3, 7563 (IVANOV S.V) 31 January 1929 (31.01.29) | 1,2 |

------------